# EUROPEAN PATENT APPLICATION

(11) **EP 4 741 086 A1**
(43) Date of publication of application: **13.05.2026**
(21) Application number: 25214820.0
(22) Date of filing: 11.11.2025
(51) Int. Cl.: B23B 27/14, B23B 27/16

(54) **CUTTING TOOL**

(30) Priority: 11.11.2024 JP 2024196410
(71) Applicant: Tungaloy Corporation, Iwaki-shi, Fukushima 970-1144 (JP)
(72) Inventor: FUJITA, Kento, Fukushima, 9701144 (JP); SASAKI, Yasutake, Fukushima, 9701144 (JP)
(74) Representative: Vossius & Partner Patentanwälte Rechtsanwälte mbB

(57) **Abstract**

In order to easily disposed a projection by accurately inspecting and measuring (correcting) a position of the projection relative to the cutting edge, and to improve the chip control regardless the insert shape by optimizing the disposition of the projection, the present invention provides a cutting tool including: an upper surface; a lower surface; a side surface; a cutting edge including a pair of major cutting edges and a corner cutting edge; a first upper surface; a second upper surface; an inclined surface; a groove disposed in the second upper surface; and a first projection and a second projection which are formed to be projected from the inclined surface. The first projection extends on the groove along the extended line, and the second projection is disposed to be linearly symmetric with respect to the extended line. At an intersection between the corner cutting edge and the bisector in a top view, L1 < L2 is established, where L1 is a distance from a virtual line intersecting perpendicularly to the bisector to a leading end of the first projection, and L2 is a distance from the virtual line to a leading end of the second projection.

## Description

### Background

### Field

The present invention relates to a cutting tool.

### Description of Related Art

To meet a demand for decreasing a corner R in a recess machining of a work using a hardened steel, a cutting tool (turning tool) for finish machining that have a small radius of curvature of a corner R, is demanded (see Japanese Patent No. 5380746, Japanese Patent No. 6861269, US Patent No. 7934891 Specification and US Patent No. 9302326 Specification). For example, in Japanese Patent No. 5380746, chip control in the finishing machining is improved by disposing a projection constituted of a major wall and a minor wall of a breaker and arranging the major wall of the breaker so as to satisfy predetermined conditions. In the case of such a cutting tool having a small corner R, deviation of the projection that functions as a breaker during the finish machining relative to the cutting edge more easily influences the performance, hence it is necessary to accurately inspect and measure (correct) the position of the projection relative to the cutting edge in the manufacturing process of the cutting tool.

### Summary

However it is difficult in practical terms to perform accurate inspection and measurement (correction), and implement disposition of the projection suitably by measuring the projection itself, which functions as a breaker, as mentioned above. This is especially true of a cutting tool, which has a relatively small radius of curvature of the corner cutting edge, a sharp included angle, and a small rake surface area around the corner cutting edge, such as a corner R of which radius of curvature R of the corner cutting edge is 0.2 mm or less. In terms of improving chip control of the finish machining of a cutting tool having a small corner R regardless the insert shape, the structure and disposition of the projection still needs to be improved.

With the foregoing in view, it is an object of the present invention to provide a cutting tool to dispose the projection suitably by accurately inspecting and measuring (correcting) a position of the projection relative to the cutting edge, and to improve the chip control of the finish machining regardless the insert shape by innovating the disposition of the projection.

To solve this problem, the present inventors studied various means. For example, various breakers to improve the chip control have been considered, as disclosed in Japanese Patent No. 5380746 and Japanese Patent No. 6861269, but applying these breakers to a cutting tool of which rake surface area around the corner cutting edge is small is difficult in some cases. In other words, it may be difficult to apply these breakers when the radius of curvature of the corner cutting edge is relatively small and the included angle is designed to be sharp, because the area of the rake surface around the corner cutting edge is small. Even if applicable, acquiring contour lines that are effective for inspection and measurement is difficult, because the projection has a complicated shape and intersects with various composing elements, such as other projections and rake surfaces. That is, it is difficult to perform accurate inspection and measurement by measuring the projection itself, therefore it is difficult to manufacture a product in which the position of the breaker does not deviate relative to the cutting edge.

An aspect of the present invention is a cutting tool that was conceived based on the knowledge obtained through the above examination, and the cutting tool includes: an upper surface; a lower surface that is disposed to face the upper surface; a side surface that connects the upper surface and the lower surface; a cutting edge that includes a pair of major cutting edges and a corner cutting edge having a projected curve shape which connects the pair of major cutting edges, the cutting edge being formed at a part of an intersecting edge of the upper surface and the side surface,; a first upper surface and a second upper surface formed on the upper surface, with the second surface being more distant from the lower surface than the first upper surface; an inclined surface that connects the first upper surface and the second upper surface; one groove disposed on the second upper surface to extend on a bisector of an angle formed by the pair of major cutting edges, or two or more grooves disposed on the second upper surface to extend linearly symmetric with respect to the bisector; and a first projection and a second projection which are formed to be projected from the inclined surface. The first projection extends on an extended line of the groove or along a line parallel with the extended line. The second projection is disposed to be linearly symmetric with respect to the bisector of the angle formed by the pair of major cutting edges, and extends to be gradually closer to the extended line of the groove as gradually approaching the corner cutting edge. At an intersection between the corner cutting edge and the bisector of the angle formed by the pair of major cutting edges in a top view, L1 < L2 is established, where L1 is a distance from a virtual line intersecting perpendicular to the bisector of the angle formed by the major cutting edges to a leading end of the first projection, and L2 is a distance from the virtual line to a leading end of the second projection.

In a side view from a direction that is perpendicular to the bisector of the angle formed by the major cutting edges and that is parallel with the upper surface, h1 < h2 < h3 is established, where h1 is a distance from the first upper surface to a top of the first projection, h2 is a distance from the first upper surface to a top of the second projection, and h3 is a distance from the first upper surface to the second upper surface respectively, in a direction perpendicular to the upper surface.

According to this cutting tool, the groove is disposed on the upper surface to be a reference for inspection and measurement. Hence by using this groove as a reference, the positions of the projections (first projection, second projection) that can function as a breaker can be accurately inspected and measured. Therefore, even if an area of a rake surface, where the projections (first projection, second projection) can be disposed, is small, a cutting tool, in which projections suitable for finish machining are accurately disposed at optimum positions, can be provided.

Further, according to the above cutting tool, the projections (first projection, second projection), of which dispositions and structures are innovated, are included, therefore chip control in the finish machining can be improved regardless the insert shape.

In the above cutting tool, θ1 < θ < θ2 is established, where θ, θ1 and θ2 are the rising angles of the inclined surface, the first projection and the second projection, the respective angles being formed with the first upper surface in the side view.

In the above cutting tool, in a case where any of the inclined surface, the first projection and the second projection is a curved line in the side view, θ, θ1 or θ2 may be a value determined by interpolating an angle of an upper end and an angle of a lower end of each of the inclined surface, the first projection and the second projection.

In the above cutting tool, the groove may have a shape which includes a pair of side walls.

In the above cutting tool, at least a pair of groove edges, existing between the side wall and the second upper surface, may be at least partially parallel.

In the above cutting tool, at least a part of the groove edge may have an edge shape.

In the above cutting tool, the groove may have a shape in which one end thereof has a constant groove width, and a groove width of the other end thereof gradually increases as the other end gradually approaches the cutting edge.

In the above cutting tool, the groove may have a shape in which one end thereof has a constant groove width, and the groove width of the other end gradually decreases as the other end gradually approaches the cutting edge.

In the above cutting tool, the groove may be disposed at a plurality of positions.

In the above cutting tool, the groove may be disposed linearly symmetric with respect to the bisector of the angle formed by the pair of major cutting edges.

In the above cutting tool, the groove may be used as a coolant supply groove, one end of which intersects with the inclined surface, to supply coolant to the cutting edge.

In the above cutting tool, the number of the second projections may be an odd number.

In the above cutting tool, the second projection may be disposed to be linearly symmetric with respect to the bisector of the angle formed by the pair of major cutting edges.

The above cutting tool may have a structure in which a sintered body containing cBN is bonded to a cemented carbide member.

### Brief Description of Drawings

FIG 1 is a perspective view of an insert (cutting tool) according to an embodiment of the present invention;
FIG. 2 is a perspective view of a peripheral area of a corner cutting edge of the insert;
FIG. 3 is a plan view of the peripheral area of the corner cutting edge of the insert;
FIG. 4 is a side view of the peripheral area of the corner cutting edge of the insert, viewed in a direction perpendicular to a bisector of an angle formed by major cutting edges and parallel with the upper surface;
FIG. 5 is a side view to indicate a rising angle θ of an inclined surface of the insert, a rising angle θ1 of a first projection, and a rising angle θ2 of a second projection, viewed in a direction perpendicular to the bisector of the angle formed by the major cutting edges and parallel with the upper surface;
FIG. 6A is a perspective view of Example 1 of a reference groove (a groove);
FIG. 6B is a plan view of Example 1 of the reference groove;
FIG. 7A is a perspective view of Example 2 of the reference groove;
FIG. 7B is a plan view of Example 2 of the reference groove;
FIG. 8A is a perspective view of Example 3 of the reference groove;
FIG. 8B is a plan view of Example 3 of the reference groove;
FIG. 9A is a perspective view of an example of the second projection; and
FIG. 9B is a plan view of an example of the second projection.

### Detailed Description

Preferred embodiments of a cutting tool according to the present invention will now be described in detail with reference to the drawings. In the following, as an example of the cutting tool, a case of applying the present invention to a cutting insert or a sintered body constituting the insert will be described using examples.

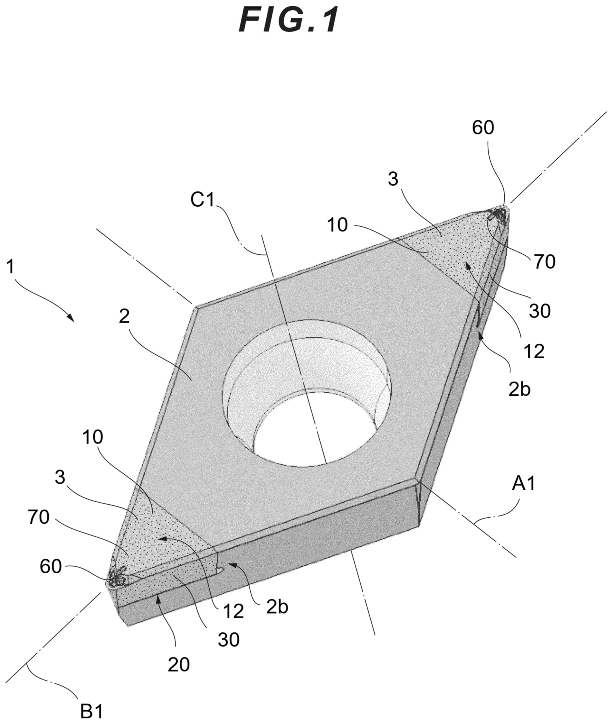

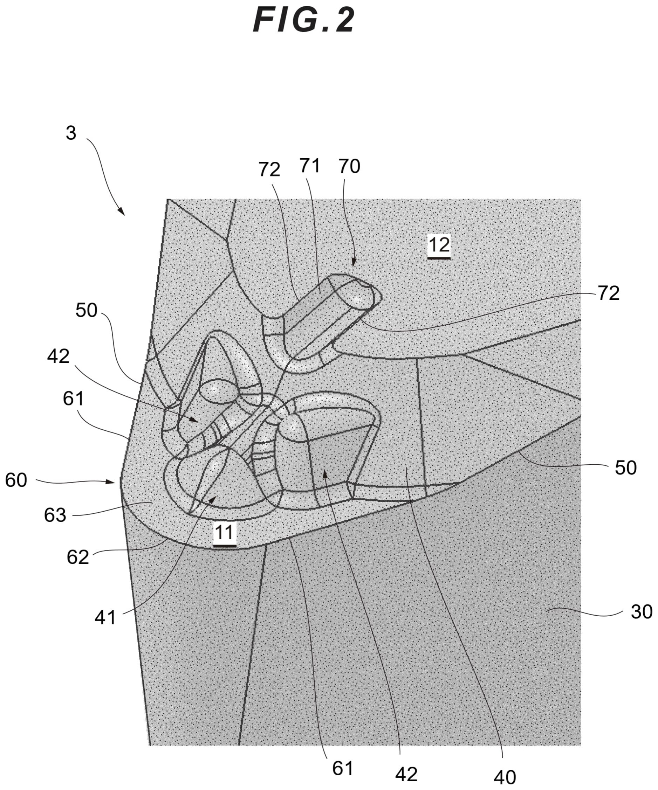

An insert 1 according to the present embodiment is constituted of a sintered body 3 (e.g. sintered body containing cBN) and a cemented carbide member 2 to which the sintered body 3 is bonded (see FIG. 1). The cemented carbide member 2 is an approximate rhombus, defined by a diagonal line along the longitudinal direction B1 and a diagonal line along the width direction A1, and has a predetermined thickness in a height direction C1. A seat portion 2b is formed at each end of the cemented carbide member 2 in the longitudinal direction B1, and the sintered body 3 is attached to each seat portion 2b respectively (see FIG. 1). The sintered body 3 includes an upper surface 10, a lower surface 20, a side surface 30, an inclined surface 40, an edge 50, a cutting edge 60, a reference groove 70, a first projection 41, and a second projection 42 (e.g. FIG. 1, FIG. 2). The sintered body 3 is formed, for example, to be a thin triangular plate.

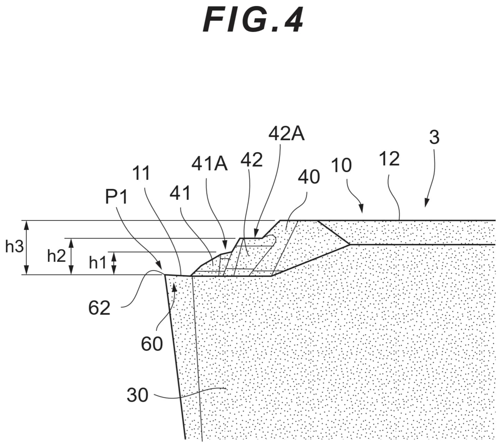

The upper surface 10 and the lower surface 20 are surfaces which constitute each side of the thin plate-like sintered body 3 in the thickness direction, and which face each other. Here the lower surface 20 is a surface on the side attached to the seat portion of the cemented carbide member 2. On the upper surface 10, a first upper surface 11 and a second upper surface 12 are formed (e.g. FIG. 4). The upper surface 10 and the lower surface 20 are connected by the side surface 30 (e.g. FIG. 1, FIG. 2).

The cutting edge 60 is formed on a part of the edge 50 which is an intersection line of the upper surface 10 and the side surface 30. The cutting edge 60 includes a pair of major cutting edges 61, a projected curve-shaped corner cutting edge 62 which connects the pair of major cutting edges 61, and a rake surface 63 (e.g. FIG. 2). The pair of major cutting edges 61 are disposed at positions which are symmetric with respect to a predetermined line. The predetermined line here is parallel with the longitudinal direction B1 in a state where the sintered body 3 is attached to the seat portion 2b of the cemented carbide member 2 (e.g. FIG. 1, FIG. 2). The angle formed by the pair of major cutting edges 61 is ϕ. A bisector Ba of the angle ϕ is parallel with the longitudinal direction B1 in the state where the sintered body 3 is attached to the seat portion 2b of the cemented carbide member 2. The corner cutting edge 62 is formed to have a corner R of which radius of curvature is relatively small (e.g. radius of curvature R is 0.2 [mm] or less).

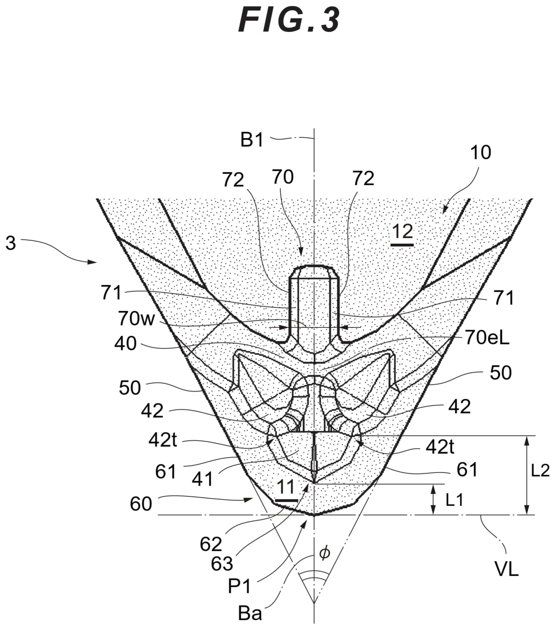

The first upper surface 11 formed on the upper surface 10 is constituted of a surface which includes the rake surface 63 of the cutting edge 60 (e.g. FIG. 3). The second upper surface 12 is a surface more distant from the lower surface 20 than the first upper surface 11, and in the case of the present embodiment, the second upper surface 12 is constituted of a plane that is parallel with the lower surface 20, and is most distant from the lower surface 20. The first upper surface 11 and the second upper surface 12 are connected by the inclined surface 40 (e.g. FIG. 4).

The reference groove 70 is used as a reference to measure the projections (first projection 41, second projection 42), and is disposed to extend from the second upper surface 12 to the cutting edge 60 (e.g. FIG. 2). The reference groove 70 can also be used as a groove to supply the coolant by intersecting one end of the reference groove 70 with the inclined surface 40. In the present embodiment, the reference groove 70 extends onto the bisector Ba of the angle ϕ formed by the pair of major cutting edges 61, and one end of the reference groove 70 intersects with the inclined surface 40, whereby the reference groove 70 functions as the groove to supply the coolant to the cutting edge 60 during cutting. If the reference groove 70 can be used to supply coolant like this, then coolant can be supplied to the peripheral area of the projections (first projection 41, second projection 42) and the cutting edge 60 during cutting. This contributes to cooling and improving lubricity of the rake surface 63 during machining, makes supplying coolant efficient, and can improve the performance of chip control. The reference groove 70, according to the present embodiment, is disposed to be linearly symmetric with respect to the bisector Ba of the angle ϕ formed by the pair of major cutting edges 61. For example, the size of the reference groove 70 is that the groove width 70w is 0.1 [mm] and the depth is 0.5 [mm].

As mentioned above, the projection has a complicated shape, and intersects with various composing elements (e.g. other projections and rake surface), hence it is difficult to acquire a contour line that is effective to inspect and measure the projection itself, but if a predetermined line acquired using the reference groove 70 is used as a reference, for example, the position of the projection, with respect to the cutting edge 60, can be measured indirectly. Hence in the present embodiment, this reference groove 70 is used not only as the groove to supply coolant but also as a groove to be a reference for inspection and measurement. In this case, by using this reference groove 70 as a reference, the positions of the projections (first projection 41, second projection 42) that function as breakers can be inspected, measured or corrected accurately. This is particularly advantageous to form the sintered body 3 or the insert 1 on which projections suitable for the finish machining are accurately disposed at optimum positions, in a case where the surface area of the rake surface, on which the projections (first projection 41, second projection 42) can be disposed, is very small. Further, in the present invention, the projections (first projection 41, second projection 42) and the groove (reference groove 70) can be formed in the same processing step by laser machining. However in the case of molding in the same processing step, if the center line of the reference groove 70 deviates from the bisector of the corner R (that is, the bisector Ba of the angle ϕ formed by the pair of major cutting edges 61), the projections also deviate by approximately the same degree. Therefore in the present embodiment, the deviation of the projections can be inspected and corrected without directly measuring the projections, of which measurement is difficult as mentioned above. Here "correcting" more specifically refers to feeding back the input values on the positions of the projections and the like, which were inputted for machining the next product (sintered body 3 or insert 1) in the production step, from the image data and the like of the products previously machined, and correcting or improving based on the feedback data. For example, the reference groove 70 on the sintered body 3 or the insert 1 of the present embodiment includes a pair of side walls 71 (e.g. FIG. 2, FIG. 3). Further, at least a part of the groove edges 72 between the pair of side walls 71 and the second upper surface 12 has an edge shape, so that the position of the groove edges 72 in an image can be more clearly recognized. At least a part of the pair of groove edges 72 may be parallel, which also makes the reference position more clearly recognizable (e.g. FIG. 3).

As mentioned above, it is difficult to perform accurate inspection and correction by measuring the projections themselves, but according to the sintered body 3 or the insert 1, where a groove to be the reference for inspection and measurement (reference groove 70 in the case of the present embodiment) is disposed on the upper surface 10, it is easy to acquire the contour line of the groove, therefore the positional accuracy of the projections (first projection 41, second projection 42), which can function as breakers, can be more easily improved. Hence even in the case where the area of the rake surface on which the projections (first projection 41, second projection 42) is very small, a cutting tool, on which projections suitable for finish machining are accurately disposed at optimum positions, can be provided. For example, if the corner cutting edge 62 has a corner R of which radius of curvature R is 0.2 [mm] or less, the leading end of the insert is very narrow, that is, it is difficult to dispose a major wall that satisfies a predetermined condition, in some cases due to the shape of the insert. According to the present embodiment however, the cutting performance can be improved more easily even in such a case.

The first projection 41 and the second projection 42 are disposed to function as breakers for the chips generated during the cutting process. The first projection 41 in the sintered body 3 or the insert 1 of the present embodiment is formed to extend along an extended line 70eL at the center of the reference groove 70, to project from the inclined surface 40 (e.g. FIG. 3, FIG. 4). The second projection 42 is a pair of projections, and is disposed to be linearly symmetric with respect to the extended line 70eL at the center of the reference groove 70, just like the first projection 41 (e.g. FIG. 3). The pair of second projections 42 have a shape that extends in a state inclined from the extended line 70eL (and the bisector Ba) in the top view from the upper surface 10 in the height direction C1, so as to be closer to the extended line 70eL of the reference groove 70 as approaching the corner cutting edge 62 (see FIG. 3).

Generally it is preferable that the projections are small to avoid chips being caught excessively, otherwise achieving the target surface quality in the finish machining becomes difficult due to the chattering and breakage of chips. On the other hand, small projections may cause an unintended override of chips, due to the axial deflection of the work, various of the thickness of a carburized layer, and the like, and this may change the behavior of chips. If the behavior of chips change, the chips may be caught in the work or the like, and may damage the machining surface. In the present embodiment, on the other hand, a small first projection 41 is disposed near the cutting edge 60 mainly to perform chip control, and a second projection 42 is disposed there behind to perform auxiliary chip control for chips not controlled by the first projection 41, that is, a two-step configuration is used to solve the above problem. Specifically, the first projection 41 mainly performs processing to curl and break chips, and the second projection 42 performs processing to curl and break chips in the case where the first projection 41 has worn down and chips override.

The specific shapes and sizes of the first projection 41 and the second projection 42 are not especially limited. For example, the first projection 41 and the second projection 42 on the sintered body 3 or the insert 1 of the present embodiment have shapes and sizes specified by the following distance L, distance h and rising angle θ (see FIGS. 3 to 5).

First at an intersection P1 of the bisector Ba of the angle ϕ formed by the pair of major cutting edges 61 and the corner cutting edge 62 in the top view, L1 < L2 is established, where L1 is a distance from a virtual line VL intersecting perpendicular to the bisector Ba of the angle ϕ formed by the major cutting edges 61 to a leading end 41t of the first projection 41, and L2 is a distance from that to a leading end 42t of the second projection 42 (see FIG. 3). The leading ends 41t and 42t here are the portions closest to the virtual line VL in the first projection 41 and the second projection 42 respectively in the top view, or the portions closest to the intersection P1 in the first projection 41 and the second projection 42 respectively in the side view.

In the side view, h1 < h2 < h3 is established in the sintered body 3 of the present embodiment, where h1 is a distance from the first upper surface 11 to the top 41A of the first projection 41, h2 is a distance from that to the top 42A of the second projection 42, and h3 is a distance from that to the second upper surface 12 respectively in a direction perpendicular to the upper surface 10 (that is, the height along the height direction C1), and h1 is 0.07 [mm], h2 is 0.13 [mm], and h3 is 0.2 [mm], for example (see FIG. 4). The tops (41A, 42A) here refer to the highest portions of the first projection 41 and the second projection 42 respectively in the height direction C1 (portions close to the second upper surface 12).

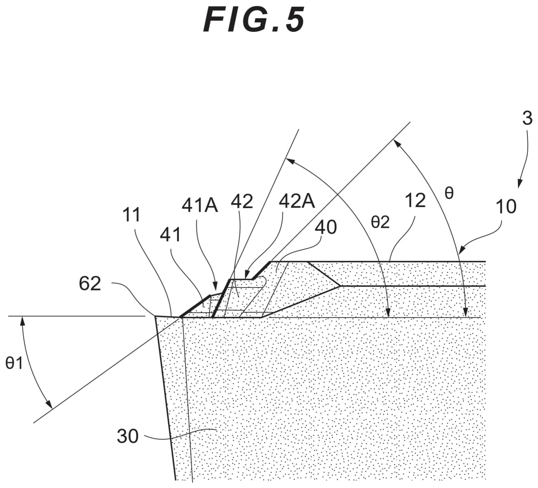

In the side view, θ1 < θ < θ2 is established in the sintered body 3 of the present embodiment, where θ, θ1 and θ2 are the rising angles of the inclined surface 40, the first projection 41 and the second projection 42 formed with the first upper surface 10 respectively, and θ is 55°, θ1 is 30° and θ2 is 68°, for example (see FIG. 5). In other words, in the present embodiment, the rising angle θ1 of the first projection 41 is set to a relatively small value, since the projection need be low to avoid chips being caught extensively, whereas the rising angle θ2 of the second projection 42 is set to a relatively large value, since the projection needs to be high to control chips that override the first projection 41 with certainty. In the case where any one of the inclined surface 40, the first projection 41 and the second projection 42 is a curve in the side view, the rising angles θ, θ1 or θ2 may be determined by interpolating the angle of the upper end and the angle of the lower end of this inclined surface 40, first projection 41 or the second projection 42. For example, for this interpolation, a value of the angle formed by the line connecting a point of the upper end and a point of the lower end of the projection (first projection 41 or second projection 42) in the side view, and the first upper surface 11, may be used.

By the sintered body 3 or the insert 1 of the present embodiment, which includes the projections (first projection 41, second projection 42) and the inclined surface 40 having dispositions and structures optimized as described above, chip control in the finish machining can be improved even for a small corner R, regardless the insert shape. Further, coolant can be supplied to the cutting edge 60 and the rake surface 63 through the reference groove 70, whereby control of the curls of the chips contacting the projections (first projection 41, second projection 42) can be promoted, making chip control easier.

### Example 1 of Reference Groove

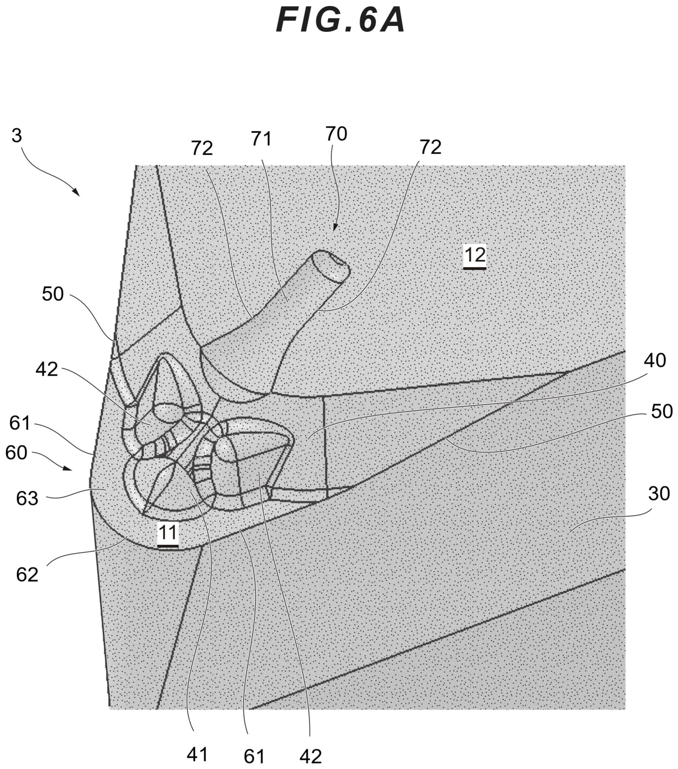

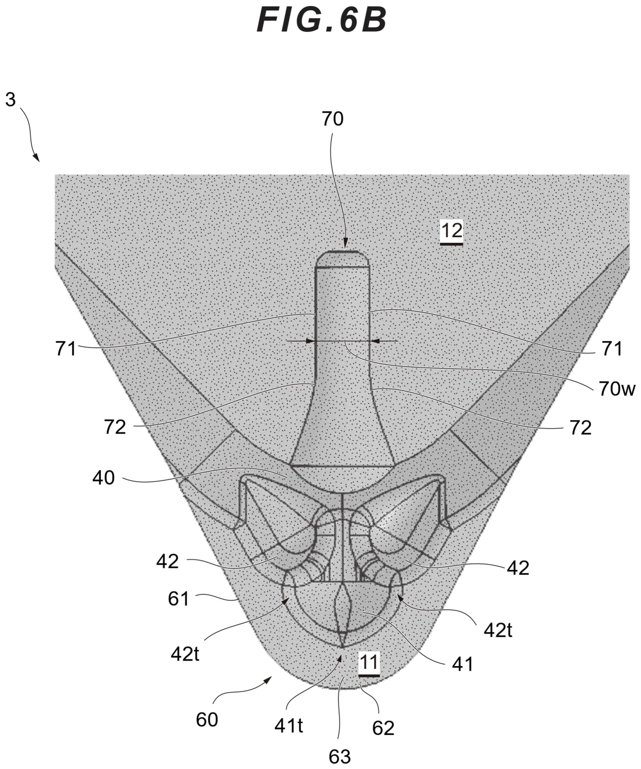

The reference groove 70 may have a shape of which one end has a constant groove width 70w, and the groove width 70w increases as the other end approaches the cutting edge 60 (see FIGS. 6A and 6B).

### Example 2 of Reference Groove

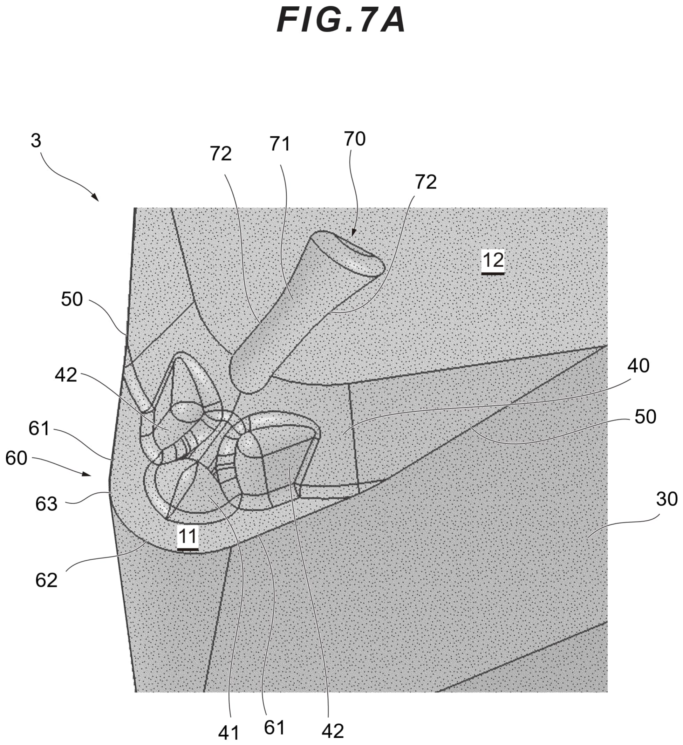

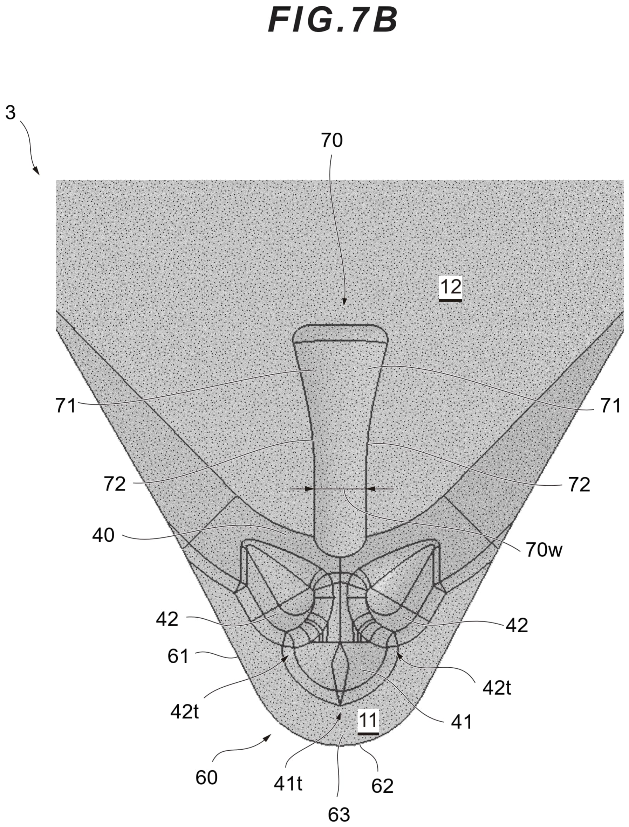

The reference groove 70 may have a shape of which one end has a constant groove width 70w, and the groove width decreases as the other end approaches the cutting edge 60, or may have a shape of which the groove width 70w decreases as one end approaches the cutting edge 60 and the other end has a constant groove width 70w (see FIGS. 7A and 7B).

### Example 3 of Reference Groove

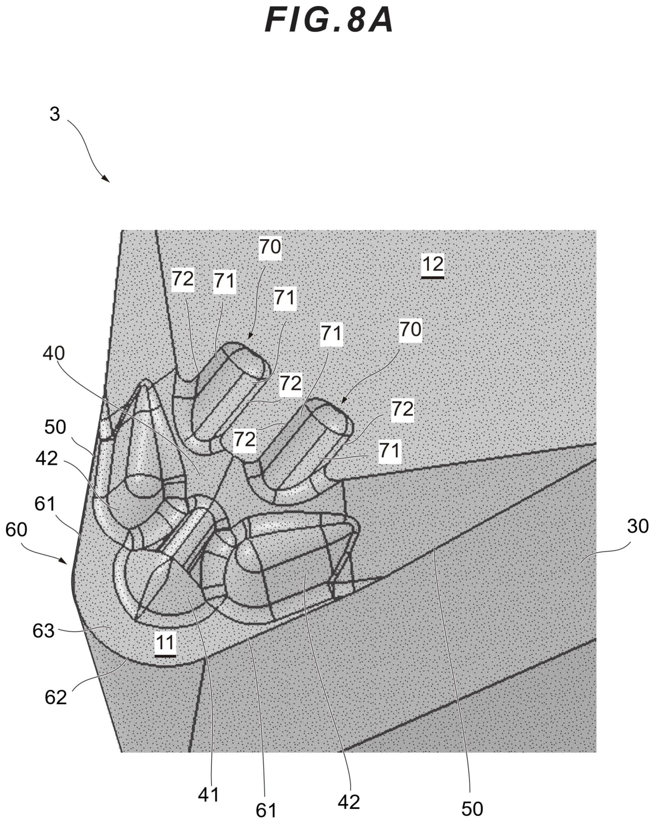

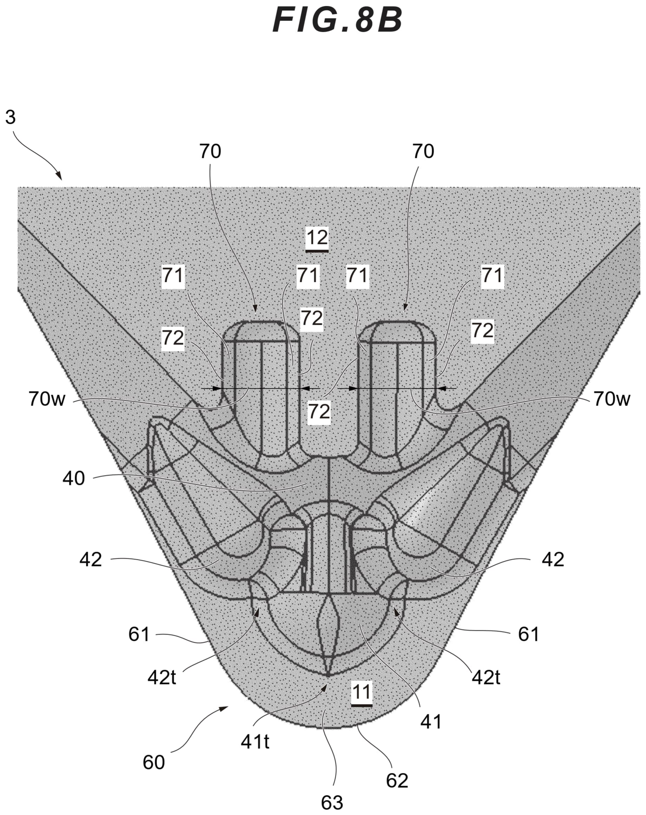

The reference groove 70 may be disposed at a plurality of positions (see FIGS. 8A and 8B).

Further, in the above cutting tool, the reference groove 70 may be linearly symmetric with respect to the bisector Ba of the angle ϕ formed by the pair of major cutting edges 61.

### Example of Second Projection

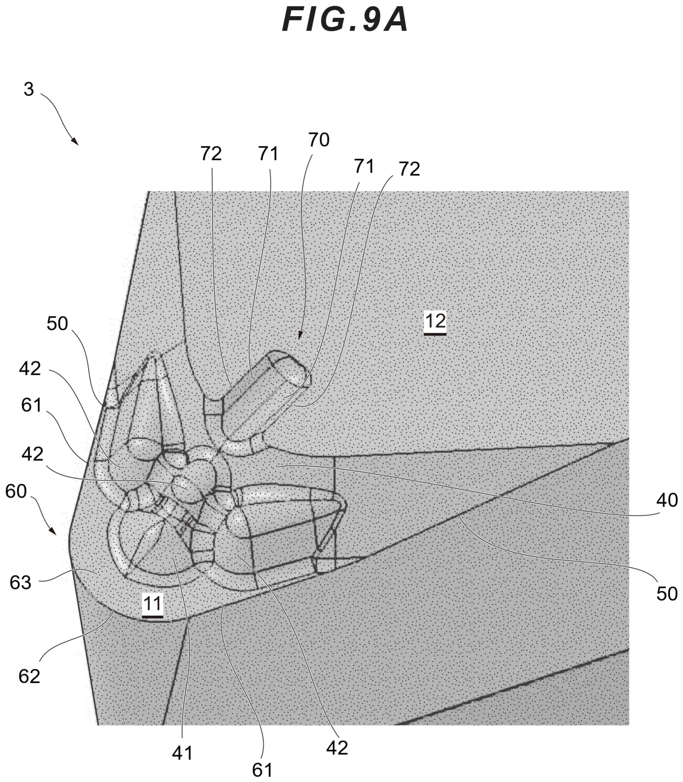

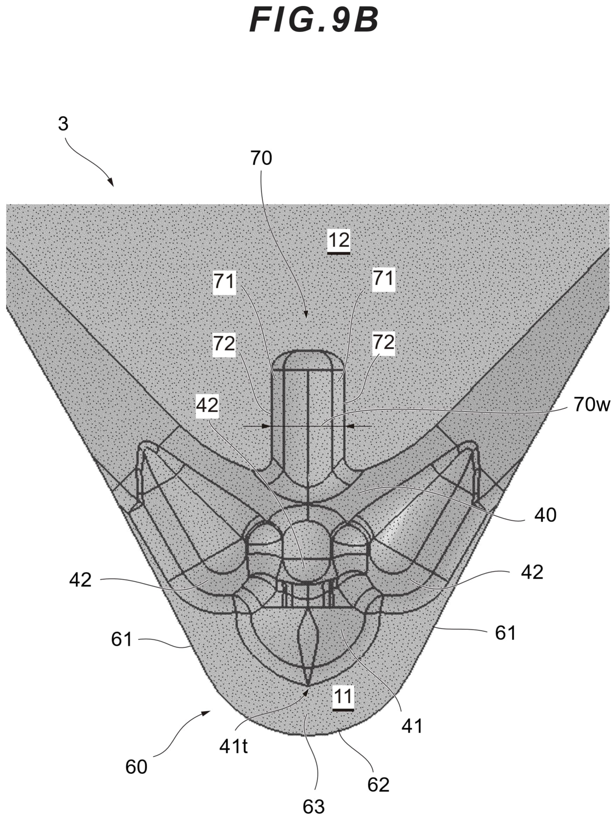

The second projection 42 may be constituted of an odd number of projections, instead of a pair (an even number) of projections (see FIGS. 9A and 9B).

Although the above mentioned embodiment is an example of a preferred embodiment of the present invention, the present invention may be modified in various ways within a scope not departing from the spirit of the invention. For example, as described in the above embodiment, the coolant groove 70 is merely a preferred example of the groove disposed on the second upper surface 12. In other words, the above mentioned reference groove 70 has both the coolant supply function and the function to be the reference for inspection and measurement, but a simple groove, not having the coolant function, may be separately disposed to be the reference for inspection and measurement. The groove to be the reference for inspection and measurement like this may have any shape, as long as an edge to be parallel with the bisector Ba of the pair of major cutting edges 61 appears at least on the second upper surface 12.

In the above mentioned embodiment, a case of applying the present invention to the sintered body 3 (e.g. cBN sintered body) or the insert 1 which includes the sintered body 3, was described, but this also is merely a preferred example. The present invention is also applicable to various cutting tools that do not include an insert, for example.

The present invention is suitably applied to cutting tools.

## Claims

1. A cutting tool comprising:
an upper surface;
a lower surface that is disposed to face the upper surface;
a side surface that connects the upper surface and the lower surface;
a cutting edge that includes a pair of major cutting edges and a corner cutting edge having a projected curve shape which connects the pair of major cutting edges, the cutting edge being formed at a part of an intersecting edge of the upper surface and the side surface;
a first upper surface and a second upper surface formed on the upper surface, with the second upper surface being more distant from the lower surface than the first upper surface;
an inclined surface that connects the first upper surface and the second upper surface;
one groove disposed on the second upper surface to extend on a bisector of an angle formed by the pair of major cutting edges, or two or more grooves disposed on the second upper surface to extend linearly symmetric with respect to the bisector; and
a first projection and a second projection which are formed to be projected from the inclined surface, wherein
the first projection extends on an extended line of the groove, or along a line parallel with the extended line, wherein
the second projection is disposed to be linearly symmetric with respect to the bisector of the angle formed by the pair of major cutting edges, and extends to be gradually closer to the extended line of the groove as gradually approaching the corner cutting edge,
at an intersection between the corner cutting edge and the bisector of the angle formed by the pair of major cutting edges in a top view, L1 < L2 is established, where L1 is a distance from a virtual line intersecting perpendicularly to the bisector of the angle formed by the major cutting edges to a leading end of the first projection, and L2 is a distance from the virtual line to a leading end of the second projection, and
in a side view from a direction that is perpendicular to the bisector of the angle formed by the major cutting edges and that is parallel with the upper surface, h1 < h2 < h3 is established, where h1 is a distance from the first upper surface to a top of the first projection, h2 is a distance from the first upper surface to a top of the second projection, and h3 is a distance from the first upper surface to the second upper surface respectively, in a direction perpendicular to the upper surface.

2. The cutting tool according to claim 1, wherein
θ 1 < θ < θ2 is established, where θ1, θ and θ2 are rising angles of the inclined surface, the first projection and the second projection, the respective angles being formed with the first upper surface in the side view.

3. The cutting tool according to claim 2, wherein
in a case where any of the inclined surface, the first projection and the second projection is a curved line in the side view, θ1, θ or θ2 is a value determined by interpolating an angle of an upper end and an angle of a lower end of each of the inclined surface, the first projection or the second projection.

4. The cutting tool according to any one of claims 1 to 3, wherein the groove has a shape which includes a pair of side walls.

5. The cutting tool according to claim 4, wherein at least a pair of groove edges existing between the side wall and the second upper surface, are at least partially parallel.

6. The cutting tool according to claim 5, wherein at least a part of the groove edge has an edge shape.

7. The cutting tool according to any one of claims 1 to 6, wherein
the groove has a shape in which one end thereof has a constant groove width, and the groove width of the other end thereof gradually increases as the other end gradually approaches the cutting edge.

8. The cutting tool according to any one of claims 1 to 6, wherein
the groove has a shape in which one end thereof has a constant groove width, and the groove width of the other end thereof gradually decreases as the other end gradually approaches the cutting edge.

9. The cutting tool according to any one of claims 1 to 8, wherein
the groove is disposed at a plurality of positions.

10. The cutting tool according to any one of claims 1 to 9, wherein
the groove is disposed to be linearly symmetric with respect to the bisector of the angle formed by the pair of major cutting edges.

11. The cutting tool according to any one of claims 1 to 10, wherein
the groove is used as a coolant supply groove, one end of which intersects with the inclined surface, to supply coolant to the cutting edge.

12. The cutting tool according to any one of claims 1 to 11, wherein
the a number of the second projections is an odd number.

13. The cutting tool according to any one of claims 1 to 12, wherein
the second projection is disposed to be linearly symmetric with respect to the bisector of the angle formed by the pair of major cutting edges.

14. The cutting tool according to any one of claims 1 to 13, comprising a structure in which a sintered body containing cBN is bonded to a cemented carbide member.
